# EUROPEAN PATENT APPLICATION

(11) **EP 4 191 802 A1**
(43) Date of publication of application: **07.06.2023**
(21) Application number: 22185322.9
(22) Date of filing: 15.07.2022
(51) Int. Cl.: H01R 13/53, H01R 24/86, H01M 50/502

(54) **CONNECTOR**

(30) Priority: 16.07.2021 CN 202121629372 U
(71) Applicant: Trend Power Technology (Changshu) Inc., Changshu High-Tech Industrial Development Zone Jiangsu, Jiangsu (CN)
(72) Inventor: LIN, Chi-Chun, 709029 Tainan City (TW)
(74) Representative: Friese Goeden Patentanwälte PartGmbB

(57) **Abstract**

The present invention provides a connector (100) that has an insulating body (200), a holder (300), at least one first power terminal (400), at least one second power terminal (500) and at least signal terminal (600). The holder (300) is located inside the insulating body (200), and has a front region and a rear region corresponded to the front region. A first creepage distance (CD1) is defined in between one of the at least one signal terminal (600) and a first power terminal (400). A second creepage distance (CD2) is defined in between the one of the at least one signal terminal (600) and a second power terminal (500). When the one of the at least one signal terminal (600) is a high-level triggered or a low anti-noise terminal, the first creepage distance (CD1) is greater than the second creepage distance (CD2). When the one of the at least one signal terminal (600) is a low-level triggered or a high anti-noise terminal, the first creepage distance (CD1) is shorter than the second creepage distance CD2).

## Description

### TECHNICAL FIELD

The present invention related to an electrical connector, especially to a connector that has power and signal terminals.

### BACKGROUND

Battery module is the driving core of the electric vehicle which operates whereby transmitting electricity and corresponding electric signals to the vehicle through an electrical connector. The pins of the connector that run electricity or communication signal, such as insulation and resistance, play important role to ensure the normal operations of the battery module.

Filling with insulating gel at back of the connector is common used to make sure power pins and signal pins are insulating to each other. However, problems such as polarization of the insulating gel, or defects in the filling stage, etc., the signal may be mistakenly driven due to the decrease of the insulation resistance during operation, so that the battery module cannot receive the correct signal resulting abnormal power supply.

### SUMMARY

The object of the present invention is to provide a connector that is able to avoid signal may be mistakenly driven due to the decrease of the insulation resistance during operation, so that the battery module cannot receive the correct signal resulting abnormal power supply.

According to an aspect of an embodiment, a connector has an insulating body, a holder, at least one first power terminal, at least one second power terminal and at least signal terminal. The holder is located inside the insulating body, and has a front region and a rear region corresponded to the front region. The first power terminal, the second power terminal and the signal terminal are mounted on the holder, which penetrating from the rear region to the front region of the holder. A first creepage distance is defined in between one of the at least one signal terminal and a first power terminal. A second creepage distance is defined in between the one of the at least one signal terminal and a second power terminal.

When the one of the at least one signal terminal is a high-level triggered or a low anti-noise terminal, the first creepage distance is greater than the second creepage distance.

When the one of the at least one signal terminal is a low-level triggered or a high anti-noise terminal, the first creepage distance is shorter than the second creepage distance.

Accordingly, the connector of the present invention uses proper arrangement of creepage distances based on the predetermined rule to ensure the insulations between terminals, especially the first creepage distance between the signal terminal and the first power terminal and the second creepage distance between the signal terminal and the second power terminal.

### BRIEF DESCRIPTION OF THE DRAWINGS

FIG. 1A is an exemplary diagram of illustrating a front view in accordance with an embodiment of the present invention;
FIG. 1B is an exemplary diagram illustrating a rear view in accordance with the embodiment of FIG. 1A;
FIG. 2A is an exemplary diagram of illustrating a front view in accordance with another embodiment of the present invention;
FIG. 2B is an exemplary diagram illustrating a rear view in accordance with the embodiment of FIG. 2A;
FIG. 3A is an exemplary diagram in accordance with yet another embodiment of the present invention;
FIG. 3B is an exemplary diagram illustrating a sectional view of line A-A in FIG. 3A;
FIG. 4A is an exemplary diagram in accordance with other embodiment of the present invention;
FIG. 4B is an exemplary diagram illustrating a sectional view of line B-B in FIG. 4A;
FIG. 5 is an exemplary diagram in accordance with other embodiment of the present invention; and
FIG. 6 is an exemplary diagram in accordance with other embodiment of the present invention.

### DETAILED DESCRIPTION

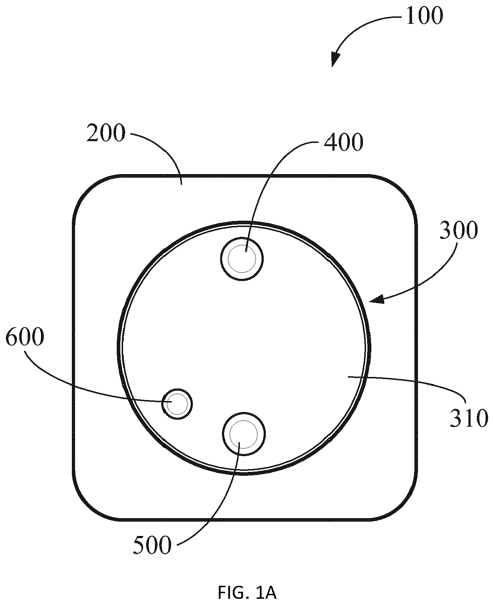

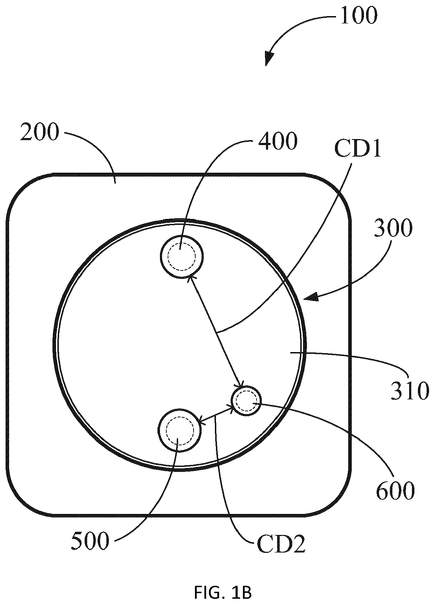

With reference to FIGs. 1A and 1B, FIG. 1A is an exemplary diagram of illustrating a front view in accordance with an embodiment of the present invention; and FIG. 1B is an exemplary diagram illustrating a rear view in accordance with an embodiment of FIG. 1A. In this embodiment, the connector 100 is configured for applying to a battery module, and comprises an insulating body 200, a holder 300 and multiple metal pins. The metal pins, according to various application may have different configuration, at least include a first power terminal 400, a second power terminal 500 and a signal terminal 600.

As shown in FIGs. 1A and 1B, the holder 300 is located inside the insulating body 200 which isolates two independent space inside the insulating body 200 defining a front region 310 at a side of holder 300 and a rear region 320 at another side.

In an embodiment, in accordance with different application needs, when the first power terminal 400 is a positive pin and the second power terminal 500 is a negative pin, the first creepage distance is defined as a distance between the signal terminal 600 and the first power terminal 400, and the second creepage distance is defined as a distance between the signal terminal 600 and the second power terminal 500.

More specifically, as show in table 1 below, based on different applications of signal terminal 600 comprising pins of low-level triggered, high-level triggered, high anti-noise and low anti-noise. The high-level triggered pin means that the corresponding recipient will be triggered when the received signal is in high-level voltage. Conversely, the low-level triggered pin receives low-level voltage for triggering the recipient. The high anti-noise pin means the corresponding recipient is higher capability anti-noise capability, and the low anti-noise pin mean the recipient has weaker resistant capability toward the noise.

Since the high-level triggered pin is for high-level voltage, if it is too close to the positive pin (i.e., the first power terminal 400), the high-level voltage at the positive pin may affect the high-level triggered pin resulting mis-triggering. Therefore, the high-level triggered pin must be located away the positive pin as far as possible. The low-level triggered pin is allowed to near the positive pin but away from the negative pin (i.e., the second power terminal 500) to prevent mis-trigger by the low-level voltage. Similarly, the low anti-noise has less tolerant of noise and thus it must locate far away from the positive pin.

**Table 1**

| | High-level triggering | Low-level triggering |
|---|---|---|
| High anti-noise ability | Less away from the positive pin | Less away from the negative pin |
| Low anti-noise ability | Must away from the positive pin | Must away from the negative pin |

Accordingly, in this embodiment, in order to avoid mis-triggering by the high-level voltage at the positive pin, when the signal terminal is a high-level triggered pin or low anti-noise pin, the first creepage distance must greater than the second creepage distance.

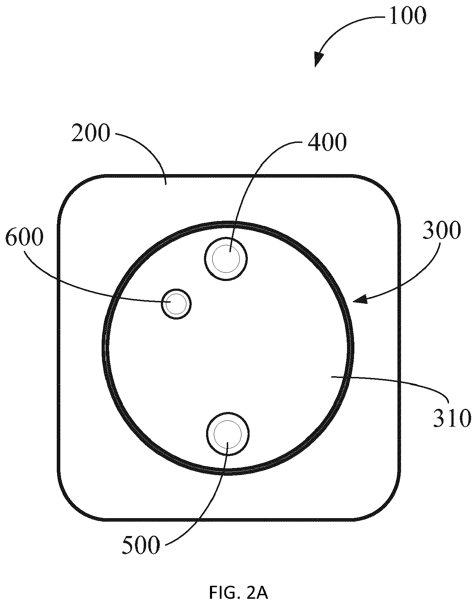

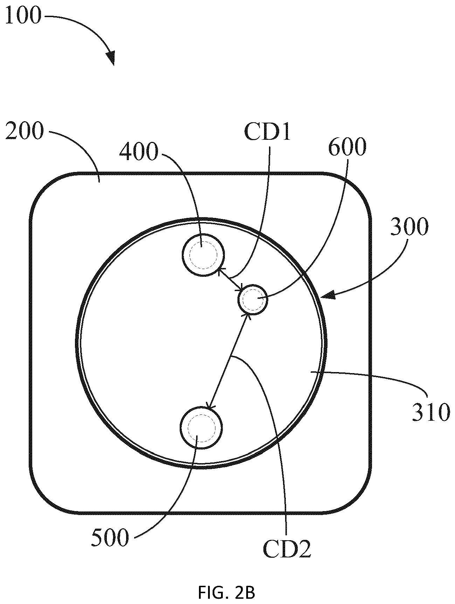

In other hand, as shown in FIGs. 2A and 2B, in order to avoid mis-triggering by the low-level voltage at the negative pin, when the signal terminal is a low-level triggered pin or high anti-noise pin, the second creepage distance must greater than the first creepage distance.

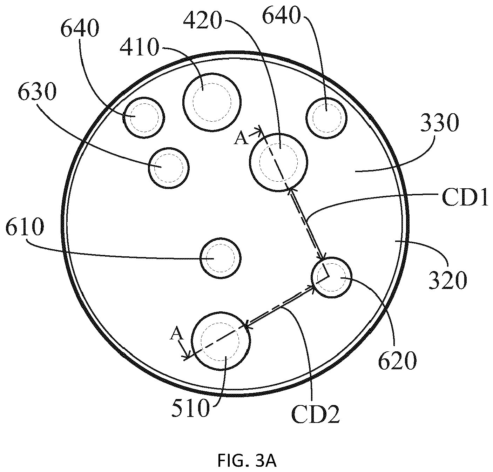

Please further reference to FIG. 3A an exemplary diagram in accordance with another embodiment of the present invention. In actually practice, signals and electricity are transmitting through the connector 100 via multiple pin combination of the first power terminal 400, the second power terminal 400 and the signal terminal 600.

As shown in FIG. 3A, the first power terminal 400 has a positive charging pin 410 and a positive discharging pin 420. The second power terminal 500 has a negative pin for charging and discharging. The signal terminal 600 has a low-level triggered pin 630, a high-level triggered pin 610, a pair of high anti-noise pin 640 and a low anti-noise pin 620. These pins are all mounted on the holder 300 that penetrate from the rear region 320 to the front region 310. The protruded pins that is exposed in the front region 310 which is configured to engage the corresponding adapter or socket. The pins exposed in the rear region 320 are connected to the corresponding cable. The rear region 320 filled with insulating gel to ensure the insulation between pins.

The charging path for the battery module is formed by the positive charging pin 410 and the negative pin 510, and the discharging path of the battery module is formed by the positive discharging pin 420 and the negative pin. It is noted that although the negative pin 50 is a single pin configured for both charging and discharging, the second power terminal 500 may have sperate negative charging pin and the negative discharging pin in another embodiment.

As previous mentioned, since the high-level triggered pin 610 of the recipient is driven by the high-level voltage, it is easy to be mis-triggered by the high-level voltages of the positive charging pin 410 or discharging pine 320 if the high-level triggered pin 610 is located too close. The high-level triggered pin 610 must away from the positive charging pin 410 or discharging pine 320. The low-level triggered pin 630 must way from the negative pin 510.

However, the numbers of pins may increase due to the needs of the application, the space of the holder may be insufficient to satisfy the above-mentioned arrangement of the creepage distance for the signal terminals 600.

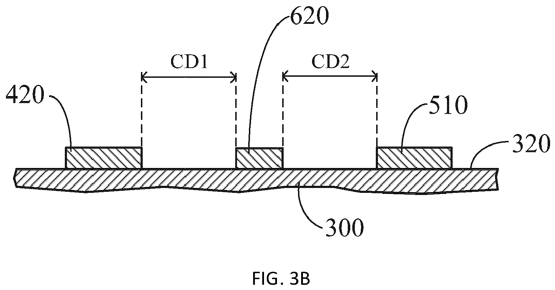

For example, as shown in FIGs 3A and 3B, ideally the low anti-noise pin 620 should place near the negative pin 510 and away from the positive charging pin 410 and the positive discharging pin 420. The first creepage distance CD1 of the low anti-noise pin 620 to the positive discharging pin 420 is almost the same to the second creepage distance CD2 of the low anti-noise pin 620 to the negative pin 510.

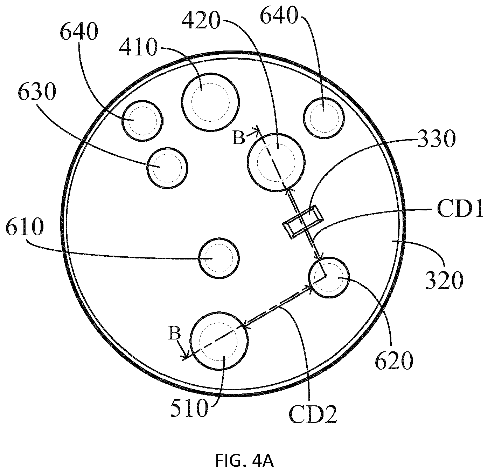

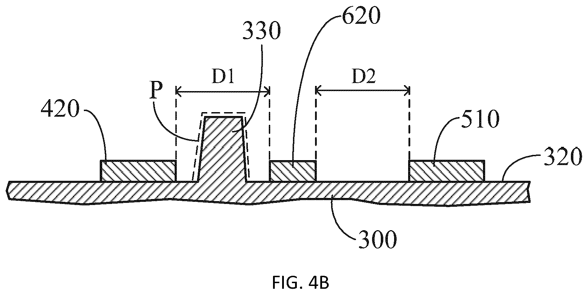

With further reference to FIGs. 4A and 4B illustrated exemplary diagrams in accordance to other embodiment of the present invention. In this embodiment, a blocking segment 330 is added to increase the first creepage distance CD1. As shown in FIG. 4A, the straight line distance (the shortest distance) between the low anti-noise pin 620 and the positive discharging pin 420 is defined as the first distance D1. The straight line distance between the low anti-noise pin 620 and the negative pin 510 is defined as the second distance D2. Basically, the first distance D1 and the second distance D2 are almost equal. The second creepage distance CD2 is the distance of the second distance D2. The first creepage distance CD1 is the summation of the first distance D1 and the shortest distance along the surface of the blocking segment. Increasing the first creepage distance CD1 is able to avoid the interfering of the positive discharging pin 420 from mis-trigger.

Moreover, because the creepage distance of the low anti-noise pin 620 and the positive charging pin 410 already larger than the second creepage distance D2. The high-level voltage of the positive charging pin 410 will not take effect of resulting mis-trigger for the low anti-noise pin 620.

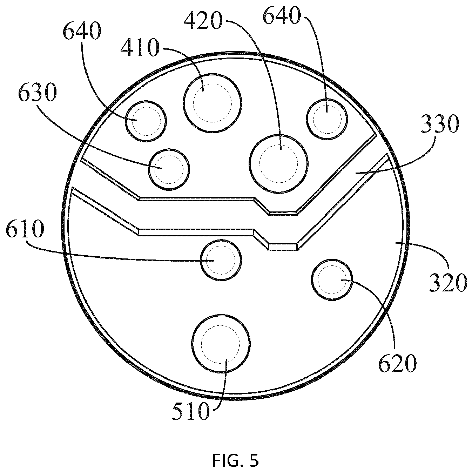

In an embodiment, as shown in FIGs. 4A and 4B, the blocking segment 330 is an independent convex formed inside the rear region 320 of the holder 300. Another embodiment of FIG. 5, the blocking segment inside the rear region 320 may be a convex formed continually along a one side to another side of the holder 300.

Yet another embodiment, the blocking segment 330 may consisting of multiple independent convex located respectively adjacent to the corresponding signal terminal 600 selectively in between the first power terminal 400 or the second power terminal 500. Furthermore, the blocking segment 330 may be a concave formation. The surface distance P of the concave can also be used to increase the overall creepage distance.

In an embodiment, the high-level triggered terminal 610 may be an Negative Temperature Coefficient (NTC) driven pin. The low-level triggered terminal 630 may comprise pins of wakeup and cable detection. The high anti-noise terminal 640 may comprise pins of Controller Area Network (CAN) high and CAN low. the low anti-noise terminal 620 may comprise pins of transmitting (Tx), receiving (Rx) and single Universal Asynchronous Receiver/Transmitter (UART).

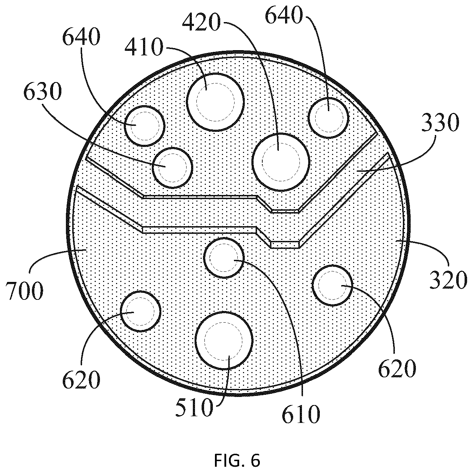

With reference to FIG. 6, an insulating gel 700 is filled in the rear region 320 of the holder 300 which covers the first power terminal 400 (i.e., the positive charging pin 410 and the positive discharging pin 420), the second power terminal 500 (i.e., the negative pin 510) and six signal terminal 600 (i.e., the low-level triggered terminal 630, a high-level triggered terminal 610, two high anti-noise terminals 630 and two low anti-noise terminal 620). The insulating gel 700 ensures insulations between terminals.

Accordingly, the connector of the present invention uses proper arrangement of creepage distances based on the predetermined rule to ensure the insulations between terminals, especially the first creepage distance CD1 between the signal terminal 600 and the first power terminal 400 and the second creepage distance CD2 between the signal terminal 600 and the second power terminal 500.

Accordingly, the present invention also relates to provides a connector that has an insulating body, a holder, at least one first power terminal, at least one second power terminal and at least signal terminal. The holder is located inside the insulating body, and has a front region and a rear region corresponded to the front region. A first creepage distance is defined in between one of the at least one signal terminal and a first power terminal. A second creepage distance is defined in between the one of the at least one signal terminal and a second power terminal. When the one of the at least one signal terminal is a high-level triggered or a low anti-noise terminal, the first creepage distance is greater than the second creepage distance. When the one of the at least one signal terminal is a low-level triggered or a high anti-noise terminal, the first creepage distance is shorter than the second creepage distance.

## Claims

1. Connector comprising:
an insulating body;
a holder being located inside the insulating body, and having a front region and a rear region corresponded to the front region; and
at least one first power terminal, at least one second power terminal and at least signal terminal being mounted on the holder, which penetrating from the rear region to the front region of the holder,
wherein the rear region of the holder comprises
a first creepage distance is defined in between one of the at least one signal terminal and a first power terminal; and
a second creepage distance is defined in between the one of the at least one signal terminal and a second power terminal;
when the one of the at least one signal terminal is a high-level triggered or a low anti-noise terminal, the first creepage distance is greater than the second creepage distance; and
when the one of the at least one signal terminal is a low-level triggered or a high anti-noise terminal, the first creepage distance is shorter than the second creepage distance.

2. Connector according to claim 1, wherein the rear region of the holder comprises at least one blocking segment, wherein the blocking segment is mounted adjacent to the at least one signal terminal selectively in between the first power terminal or the second power terminal.

3. Connector according to claim 2, wherein
the first creepage distance is the distance including the first distance and the shortest distance along the surface of the blocking segment; and
the second creepage distance is the distance including the second distance and the shortest distance along the surface of the blocking segment, wherein
the first distance is the shortest distance between the first signal terminal and the first power terminal; and
the second distance is the shortest distance between the first signal terminal and the second power terminal.

4. Connector according to claim 3, wherein the at least one blocking segment is formed as a concave or a convex of the holder.

5. Connector according to any of the preceding claims, wherein
the at least one first power terminal is a positive charging terminal, a positive discharging terminal or a positive terminal for both charging and discharging; and
the at least one second power terminal is a negative charging terminal, a negative discharging terminal or a negative terminal for both charging and discharging.

6. Connector according to any of the preceding claims, wherein
the high-level triggered terminal comprises an NTC driven pin; and
the low-level triggered terminal comprises pins of wakeup and cable detection.

7. Connector according to any of the preceding claims, wherein the high anti-noise terminal comprises pins of CAN high and CAN low.

8. Connector according to any of the preceding claims, wherein the low anti-noise terminal comprises pins of transmitting, receiving and single UART.

9. Connector according to any of the preceding claims, further comprising an insulating gel filled in the rear region of the holder which covers the at least one first power terminal, at least one second power terminal and at least one signal terminal.

10. Connector being configured for connecting to a battery module, and comprising:
an insulating body;
a holder being located inside the insulating body, and having a front region and a rear region corresponded to the front region; and
at least one first power terminal, at least one second power terminal and at least signal terminal being mounted on the holder, which penetrating from the rear region to the front region of the holder,
wherein the rear region of the holder comprises
a first creepage distance is defined in between one of the at least one signal terminal and a first power terminal; and
a second creepage distance is defined in between the one of the at least one signal terminal and a second power terminal;
when the one of the at least one signal terminal is a high-level triggered or a low anti-noise terminal, the first creepage distance is greater than the second creepage distance; andPP
when the one of the at least one signal terminal is a low-level triggered or a high anti-noise terminal, the first creepage distance is shorter than the second creepage distance;
wherein the at least one first power terminal is a positive charging terminal, a positive discharging terminal or a positive terminal for both charging and discharging;
the at least one second power terminal is a negative charging terminal, a negative discharging terminal or a negative terminal for both charging and discharging;
the high-level triggered terminal comprises an NTC driven pin; and
the low-level triggered terminal comprises pins of wakeup and cable detection.
